Europäisches Patentamt

European Patent Office

Office européen des brevets

(19)

(11) **EP 1 295 481 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(21) Anmeldenummer: **01962771.0**

(22) Anmeldetag: **23.06.2001**

(51) Int Cl.⁷: **H04N 7/24**

(86) Internationale Anmeldenummer:
**PCT/EP2001/007149**

(87) Internationale Veröffentlichungsnummer:
**WO 2002/001878 (03.01.2002 Gazette 2002/01)**

(54) **VERFAHREN UND VORRICHTUNG ZUR ZEITSYNCHRONEN WEITERLEITUNG VON SIGNALEN**

METHOD AND DEVICE FOR THE TIME-SYNCHRONISED RELAYING OF SIGNALS

PROCEDE ET DISPOSITIF DE TRANSMISSION SYNCHRONE DE SIGNAUX

(84) Benannte Vertragsstaaten:
**AT BE CH CY DE DK ES FI FR GB GR IE IT LI LU MC NL PT SE TR**

(30) Priorität: **28.06.2000 DE 10031355**

(43) Veröffentlichungstag der Anmeldung:
**26.03.2003 Patentblatt 2003/13**

(73) Patentinhaber: **Grundig AG
90471 Nürnberg (DE)**

(72) Erfinder: **BUSCH, Hans-Jürgen
91186 Büchenbach (DE)**

(56) Entgegenhaltungen:
**WO-A-99/52298          GB-A- 2 273 215
US-A- 5 570 372**

- **KIRBY D G ET AL: "A NEW TECHNIQUE TO MAINTAIN SOUND AND PICTURE SYNCHRONISATION" EBU REVIEW-TECHNICAL, EUROPEAN BROADCASTING UNION. BRUSSELS, BE, Nr. 264, 1995, Seiten 13-21, XP000670474 ISSN: 0251-0936**

EP 1 295 481 B1

## Beschreibung

Die Erfindung betrifft ein Verfahren und eine Vorrichtung zur zeitsynchronen Weiterleitung von Signalen.

Eine derartige zeitsynchrone Weiterleitung von Signalen ist beispielsweise für Audio/Video-Systeme und für Mehrkanal-Audio-Systeme von Bedeutung. Dort besteht jeweils die Notwendigkeit, von einer oder mehreren Signalquellen zu einer oder mehreren Signalsenken über verschiedene Signalpfade übertragene Signale zeitsynchron der bzw. den Senken zuzuführen und dort wiederzugeben.

Im Falle einer Weiterleitung von synchronen Signalen über asynchrone Signalpfade kann eine zeitsynchrone Weiterleitung an die Signalsenken durch Einfügen von Zeitmarken in das zu übertragende Datensignal gewährleistet werden. Diese eingefügten Zeitmarken werden am Ende eines asynchronen Signalpfades dazu verwendet, die Signale zeitlich korrekt weiterzuleiten. Die Zeitmarken selbst werden dabei wieder aus dem übertragenen Datensignal entfernt.

Auf diesem Prinzip basieren bekannte digitale Übertragungssysteme. Bei diesen sind durch die Vorgabe eines Referenzmodells für den Empfänger die auftretenden Verzögerungs- bzw. Verarbeitungszeiten bekannt, so daß der Sender bzw. die Signalquelle die in die Datensignale einzusetzenden Zeitmarken unter Verwendung einer gemeinsamen Zeitbasis und der bekannten Verzögerungs- bzw. Verarbeitungszeiten berechnen kann. Systeme, die gemäß dieser Vorgehensweise arbeiten, sind beispielsweise in den Standards IEC 13818 "Coding of moving pictures and associated audio" sowie IEC 61883-4 "Consumer audio/video equipment - Digital interface - Part 4: MPEG data transmission" beschrieben. Nachteilig bei der bekannten Vorgehensweise ist, daß sie nur beim Vorliegen bekannter Signalverarbeitungspfade angewendet werden kann, da sie das Vorhandensein eines Referenzmodells der verschiedenen Datenpfade voraussetzt, anhand dessen die auftretenden Verzögerungs- bzw. Verarbeitungszeiten bestimmt werden können.

Ausgehend von diesem Stand der Technik liegt der Erfindung die Aufgabe zugrunde, ein Verfahren bzw. eine Vorrichtung zur zeitsynchronen Weiterleitung von Signalen anzugeben, die die vorstehend genannten Nachteile nicht aufweist.

Diese Aufgabe wird durch ein Verfahren mit den im Anspruch 1 bzw. durch eine Vorrichtung mit den im Anspruch 5 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß eine zeitsynchrone Weiterleitung von über verschiedene Signalpfade übertragenen Signalen, die in diesen Signalpfaden unterschiedlichen signalverarbeitungsbedingten Verzögerungen unterworfen sind, auch beim Vorliegen von heterogenen Datenpfaden sichergestellt ist. Durch die Ermittlung der in den verschiedenen Signalpfaden auftretenden Verzögerungen, die vorzugsweise für jeden Prozeßschritt einzeln erfolgt, und die nachfolgende Berechnung einer minimalen Gesamtverzögerung kann am Anwendungsort selbst im Rahmen der Erstbetriebnahme einer Anlage und/oder während des laufenden Betriebes eine anlagenspezifische Berechnung der minimalen Gesamtverzögerung erfolgen. Dieser berechnete Wert kann im Betrieb entweder automatisch in vorgegebenen Zeitabständen, automatisch bei einer Änderung der Signalpfade oder nach Eingabe eines Bedienbefehls aktualisiert werden. Dadurch kann auch Änderungen der Signalpfadarchitektur Rechnung

Aus EBU Technical Review, Summer 1995, Seite 13 ff ist eine Verzögerung der Audiodaten, welche zusammen mit einem Videosignal übertragen werden, bekannt, um Lippensynchronität herzustellen.

Aus GB-A-2273215 ist bekannt, über eine Vorrichtung manuelle Delay-Einstellungen für Audio- und Videosignale vorzunehmen. Im Weiteren ist bekannt, dass zwischen Audio- und Videosignal ein Zeitdelay auftreten kann. Dieses wird aber nur über eine manuelle Einstellung kompensiert.

In US 5,570,372 wird das Problem der Lippensynchronisation gelöst. Es existiert eine Quelle und zwei Senken. Zeitmarken und das Einfügen von Zeitmarken in Signale ist nicht offenbart.

Aus WO 99/52298 ist es bekannt, eine Verzögerung eines Audio- und eines Videosignals vorzunehmen, um beide nach einer Prozessverarbeitung zu synchronisieren. Hierbei wird eine Puffersteuerung realisiert. Ein Einfügung von Zeitmarken und eine Verzögerung als Basis für Zeitmarken ist nicht offenbart. getragen werden, beispielsweise einer Zwischenschaltung weiterer Signalverarbeitungseinheiten oder einer Entfernung von Signalverarbeitungseinheiten aus der Anlage. Durch die Einfügung einer Information über die berechnete minimale Gesamtverzögerung in das zu übertragende Datensignal wird einem im Signalweg vor der Signalsenke angeordneten Verzögerer mitgeteilt, welche individuelle Verzögerung einem im jeweiligen Signalpfad übertragenen Signal auferlegt werden muß, um zu erreichen, daß die in allen Signalpfaden übertragenen Signale zeitsynchron an die Senke bzw. Senken weitergeleitet werden können.

Eine Anwendung des beanspruchten Verfahrens und der beanspruchten Vorrichtung kann nicht nur bei Audio-/Video-Systemen und bei Mehrkanal-Audio-Systemen erfolgen, sondern beispielsweise auch bei anderen Konsumelektroniksystemen, Hausvernetzungssystemen und allen anderen Informationsübertragungssystemen, bei denen Signale von mindestens einer Signalquelle über verschiedene Signalpfade zu mindestens einer Signalsenke übertragen werden und dort zeitsynchron ankommen müssen.

Nachfolgend wird die Erfindung anhand eines Ausführungsbeispiels näher erläutert, welches in den Figuren dargestellt ist. Es zeigt

Figur 1 eine Vorrichtung zur zeitsynchronen Weiterleitung von Signalen und

Figur 2 ein zugehöriges Verzögerungsdiagramm.

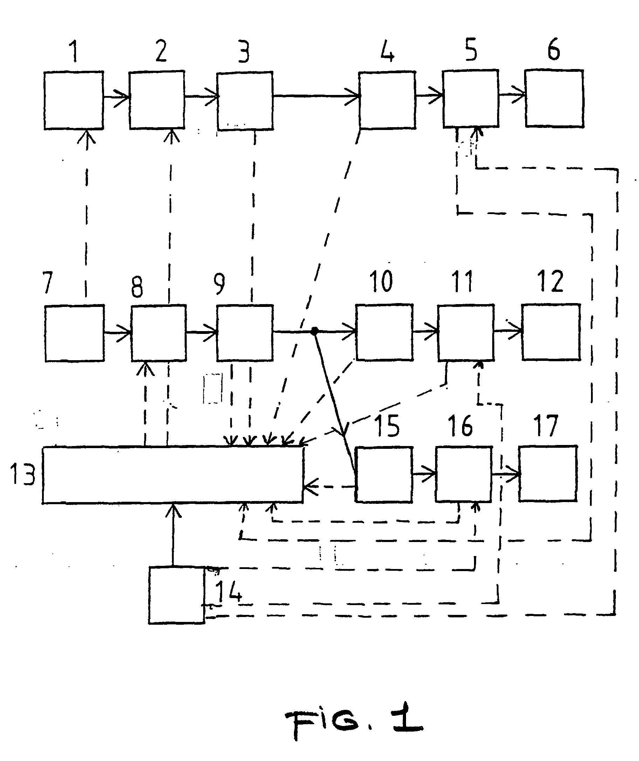

Die Figur 1 zeigt eine Vorrichtung zur zeitsynchronen Weiterleitung von Signalen, die nach dem erfindungsgemäßen Verfahren arbeitet.

Die dargestellte Vorrichtung weist zwei Signalquellen 1, 7 auf, deren Ausgangssignale über verschiedene Signalpfade zu den Signalsenken 6, 12, 17 übertragen werden sollen.

Im ersten Signalpfad, der sich vom Ausgang der Signalquelle 1 bis zum Eingang der Signalsenke 6 erstreckt, sind in Reihe hintereinander eine Vorrichtung 2 zum Einfügen von Zeitmarken, eine Signalverarbeitungseinheit 3, eine Signalverarbeitungseinheit 4 und ein Verzögerungsglied 5 vorgesehen.

Der zweite Signalpfad, der sich vom Ausgang der Signalquelle 7 bis zum Eingang der Signalsenke 12 erstreckt, enthält in Reihe hintereinander eine Vorrichtung 8 zum Einfügen von Zeitmarken, eine Signalverarbeitungseinheit 9, eine Signalverarbeitungseinheit 10 und ein Verzögerungsglied 11.

Im dritten Signalpfad, der sich vom Ausgang der Signalquelle 7 bis zum Eingang der Signalsenke 17 erstreckt, sind in Reihe hintereinander die Vorrichtung 8 zum Einfügen von Zeitmarken, die Signalverarbeitungseinheit 9, die Signalverarbeitungseinheit 15 und ein Verzögerungsglied 16 vorgesehen.

Weiterhin weist die gezeigte Vorrichtung eine Steuereinheit 13 auf, bei der es sich vorzugsweise um einen Mikrocomputer handelt. Dieser ist mit einer Zeitbasis 14 verbunden, weiche der Steuereinheit ein für die gesamte Vorrichtung als Zeitbasis dienendes Zeitbasissignal zur Verfügung stellt. Weiterhin weist die Steuereinheit 13 einen oder mehrere Eingänge auf, über welche sie die maximal mögliche Verzögerungszeit der Signalverarbeitungseinheiten 3, 4, 9, 10 und 15 abfragen kann. Es ist allgemein vorausgesetzt, daß die einzelnen Signalverarbeitungseinheiten die Verzögerungszeit selbst ermitteln oder kennen. Die Information über die einer Signalverarbeitungseinheit zugehörige Verzögerung kann auch unter Verwendung der im übertragenen Signal enthaltenen Zeitbasisinformation ermittelt werden, oder bei Vorliegen eines Referenzmodells kann diese der Steuereinheit a priori bekannt sein. Zusätzlich zu der im übertragenen Signal enthaltenen Zeitbasisinformation kann zur Ermittlung der einer Signalverarbeitungseinheit zugehörigen Verzögerung von anderen Signalverarbeitungseinheiten zugehörigen Verzögerungswerten Gebrauch gemacht werden, die in der Steuereinheit 13 vorher abgespeichert wurden.

Beispielsweise wird in der Signalquelle 1 die von der Steuereinheit 13 zu Verfügung gestellte Zeitbasisinformation als erste Zeitmarke in das Ausgangssignal der Signalquelle 1 eingesetzt. Das Ausgangssignal der Signalquelle 1 durchläuft zunächst die Vorrichtung 2 und wird dann in der Signalverarbeitungseinheit 3 einem Signalverarbeitungsprozeß unterworfen, bei welchem dem zu übertragenden Signal eine signalverarbeitungsspezifische Verzögerung auferlegt wird. Dieser signalverarbeitungsspezifische Verzögerungswert kann entweder in der Signalverarbeitungsschaltung 3 durch Auswertung der Zeitbasisinformation ermittelt werden und dann der Steuereinheit 13 mitgeteilt werden oder erst in der Steuereinheit 13 selbst ermittelt werden, welche ebenfalls Zugriff auf die Zeitbasis hat.

Der ermittelte signalverarbeitungsspezifische Verzögerungswert, der der Signalverarbeitungseinheit 3 zugeordnet ist, wird in der Steuereinheit 13 abgespeichert.

Das Ausgangssignal der Signalverarbeitungseinheit 3 wird der Signalverarbeitungseinheit 4 zugeführt und dort einer weiteren signalverarbeitungsspezifischen Verzögerung unterworfen. Diese weitere signalverarbeitungsspezifische Verzögerung kann entweder in der Signalverarbeitungseinheit 4 selbst durch Auswertung der Zeitbasisinformation ermittelt werden und dann der Steuereinheit 13 mitgeteilt werden oder erst in der Steuereinheit 13 selbst ermittelt werden, weiche ebenfalls Zugriff auf die Zeitbasis 14 hat und welche auch Informationen über den der Signalverarbeitungseinheit 3 zugeordneten Verzögerungswert hat.

Der ermittelte signalverarbeitungsspezifische Verzögerungswert, der der Signalverarbeitungseinheit 4 zugrunde liegt, wird ebenfalls in der Steuereinheit 13 abgespeichert.

Durch eine Summation der den Signalverarbeitungseinheiten 3 und 4 zugeordneten Verzögerungswerte wird in der Steuereinheit 13 die im ersten Signalpfad insgesamt auftretende, signalverarbeitungsbedingte Verzögerung ermittelt und als Verzögerungswert abgespeichert. Auf ähnliche Weise werden die in den Signalverarbeitungseinheiten 9 und 10 auftretenden Verzögerungen ermittelt und durch deren Summation die im zweiten Signalpfad insgesamt auftretende Verzögerung berechnet und in der Steuereinheit 13 als Verzögerungswert abgespeichert. Ebenso erfolgt eine Ermittlung der in der Signalverarbeitungseinheit 15 auftretenden Verzögerung und durch eine Summation der den Signalverarbeitungseinheiten 9 und 15 zugeordneten Verzögerungen die Berechnung der im dritten Signalpfad insgesamt auftretenden Verzögerung und die zugehörige Abspeicherung in der Steuereinheit 13.

Anschließend erfolgt in der Steuereinheit 13 ein Vergleich der in den drei Signalpfaden insgesamt auftretenden Verzögerungen mit dem Ziel, eine minimale Gesamtverzögerung zu ermitteln. Die minimale Gesamtverzögerung entspricht vorzugsweise dem Maximalwert der in den drei Signalpfaden auftretenden Verzögerungen, kann aber auch größer gewählt werden, um ein Zeitreservoir zur Verfügung zu haben.

Wird nun in jedem der Signalpfade sichergestellt, daß die Weiterleitung des jeweiligen Signals an die zugehörige Signalsenke erst bei oder nach dem Ablauf der minimalen Gesamtverzögerung erfolgt, dann kann eine zeitsynchrone Weiterleitung der Signale an die Signalsenken 6, 12, 17 erreicht werden.

Um dies zu erreichen, stellt die Steuereinheit 13 an einem Ausgang eine Zeitinformation zur Verfügung, welche das um die minimalen Gesamtverzögerung verzögerte Zeitbasissignal enthält. Dieses Signal wird jeder der Vorrichtungen 2 und 8 zugeführt und dort in das aus der jeweiligen Signalquelle stammende, zu übertragende Signal eingesetzt.

Diese Information durchläuft zusammen mit dem zu übertragenden Signal den jeweiligen Signalpfad und gelangt an die Verzögerungsglieder 5, 11 bzw. 16. Diesen steht auch das Zeitbasissignal der Zeitbasis 14 zur Verfügung. Die Zeitinformation im Signal gibt an, wann das jeweilige Verzögerungsglied das Signal am Ausgang weiterleiten soll. So erfolgt jeweils eine individuelle Verzögerung des zu übertragenden Signals um eine Verzögerungszeit, die der Differenz zwischen der minimalen Gesamtverzögerung und der dem Signal im jeweiligen Signalweg auferlegten signalverarbeitungsbedingten Verzögerung entspricht. Das Verzögerungsglied jedes Signalpfades ist im Signalweg zwischen der Signalquelle und der Signalsenke angeordnet, vorzugsweise zwischen der hintersten Signalverarbeitungseinheit des jeweiligen Signalweges und der jeweiligen Signalsenke.

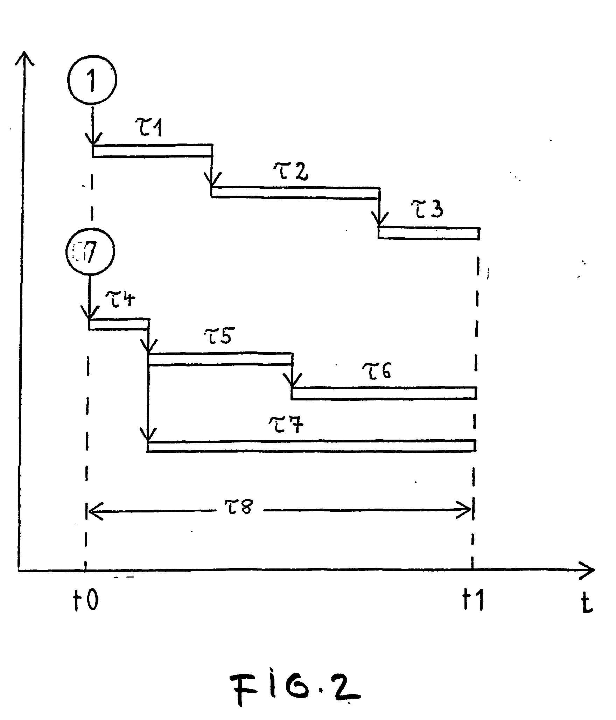

In der Figur 2 ist ein Verzögerungsdiagramm gezeigt, welches die zeitlichen Abläufe in der in Figur 1 gezeigten Vorrichtung veranschaulicht.

In diesem Diagramm ist davon ausgegangen, daß die Signalquellen 1 und 7 ihre Ausgangssignale zeitgleich zum Zeitpunkt t0 zur Verfügung stellen. Diese Zeitsynchronität kann durch die Steuereinheit 13 sichergestellt werden, die entweder die Signalquellen gleichzeitig startet oder den Signalquellen ein gemeinsames Zeitbasissignal zuführt, aufgrund dessen die Signalquellen mit der Signalausgabe beginnen.

Im oberen Teil des Diagrammes sind die im ersten Signalpfad auftretenden Verzögerungen veranschaulicht. Dabei ist mit $\tau 1$ diejenige Verzögerungszeit bezeichnet, der das zu übertragende Signal in der Signalverarbeitungseinheit 3 unterworfen ist und mit $\tau 2$ diejenige Verzögerungszeit, der das zu übertragende Signal in der Signalverarbeitungseinheit 4 unterworfen ist. $\tau 3$ ist diejenige individuelle Verzögerungszeit, die der Differenz zwischen der minimalen Gesamtverzögerung $\tau 8$ und der Summe der Verzögerungszeiten $\tau 1$ und $\tau 2$ entspricht, also:

$$\tau 3 = \tau 8 - (\tau 1 + \tau 2).$$

Um diese individuelle Verzögerungszeit $\tau 3$ wird das im ersten Signalpfad zu übertragende Signal im Verzögerungsglied 5 verzögert.

Im unteren Teil des Diagrammes sind die im zweiten und dritten Signalpfad auftretenden Verzögerungen veranschaulicht.

Im zweiten Signalpfad ist mit $\tau 4$ diejenige Verzögerungszeit bezeichnet, der das zu übertragende Signal in der Signalverarbeitungseinheit 9 unterworfen ist, und mit $\tau 5$ diejenige Verzögerungszeit, der das zu übertragende Signal in der Signalverarbeitungseinheit 10 unterworfen ist. $\tau 6$ ist diejenige individuelle Verzögerungszeit, die der Differenz zwischen der minimalen Gesamtverzögerung $\tau 8$ und der Summe der Verzögerungszeiten $\tau 4$ und $\tau 5$ entspricht, also:

$$\tau 6 = \tau 8 - (\tau 4 + \tau 5).$$

Um diese individuelle Verzögerungszeit $\tau 6$ wird das im zweiten Signalpfad zu übertragende Signal im Verzögerungsglied 11 verzögert.

Im dritten Signalpfad ist mit $\tau 4$ diejenige Verzögerungszeit bezeichnet, der das zu übertragende Signal in der Signalverarbeitungseinheit 9 unterworfen ist, und mit $\tau 7$ diejenige Verzögerungszeit, der das zu übertragende Signal in der Signalverarbeitungseinheit 15 unterworfen ist. Die individuelle Verzögerungszeit, die der Differenz zwischen der minimalen Gesamtverzögerung $\tau 8$ und der Summe der Verzögerungszeiten $\tau 4$ und $\tau 7$ entspricht, ist beim gezeigten Ausführungsbeispiel gleich Null. Folglich wird das im dritten Signalpfad übertragene Signal nach dem Durchlaufen der Signalverarbeitungseinheit 15 keiner weiteren individuellen Verzögerung unterworfen, da die Summe der im dritten Signalpfad auftretenden signalverarbeitungsbedingten Verzögerungen der ermittelten minimalen Gesamtverzögerung entspricht.

Nach dem Ablauf der mit $\tau 8$ bezeichneten minimalen Gesamtverzögerung, also zum Zeitpunkt t1, werden die Ausgangssignale der drei Signalpfade zeitsynchron an die jeweilige Signalsenke 6, 12 bzw. 17 weitergeleitet.

Gemäß einer nicht in den Zeichnungen dargestellten Ausführungsform der Erfindung wird die minimale Gesamtverzögerung größer als die Summe der signalverarbeitungsbedingten Verzögerungen im Signalpfad, der diesbezüglich die größten Verzögerungen aufweist, gewählt, um bezüglich der zeitsynchronen Weiterleitung der Signale ein gewünschtes Zeitreservoir zu haben. Bei dieser Ausführungsform erfolgt in jedem Signalpfad eine individuelle Verzögerung des zu übertragenden Signals.

Alternativ zu der in der Figur 1 gezeigten Ausführungsform kann das Einfügen der Zeitmarken, die eine Information über die minimale Gesamtverzögerung enthalten, auch in den Signalquellen selbst erfolgen.

Weiterhin können diese Zeitmarken, die eine Information über die minimale Gesamtverzögerung enthalten, auch zur Modifikation von im Signal bereits enthaltenen ersten Zeitmarken verwendet werden, die bereits in der Signalquelle in das zu übertragende Signal eingesetzt wurden und beispielsweise eine Information über die gemeinsame Zeitbasis enthalten.

Bei einer weiteren, ebenfalls nicht in den Figuren dargestellten Ausführungsform wird die Information über die minimale Gesamtverzögerung nicht in das zu übertragende Signal eingesetzt, sondern unabhängig von diesem an das jeweilige Verzögerungsglied übermittelt, in welchem die zur Herstellung der Zeitsynchronität erforderliche individuelle Signalverzögerung erfolgt.

Die in der Steuereinheit erfolgende Berechnung der minimalen Gesamtverzögerung kann bei der Inbetriebnahme der Vorrichtung im Sinne eines automatischen oder nach Eingabe eines Bedienbefehls ausgelösten Initialisierungslaufes einmalig erfolgen und auch im späteren Betrieb aktualisiert werden. Dies ist insbesondere dann von Bedeutung, wenn Veränderungen der Signalpfadarchitektur vorgenommen werden, beispielsweise ein Hinzufügen oder ein Entfernen von Baugruppen aus einem oder mehreren der Signalpfade. In diesen Fällen erfolgt eine Neuberechnung der minimalen Gesamtverzögerung, die der Berechnung der individuellen, im jeweiligen Signalpfad erfolgenden Verzögerungen zugrunde liegt.

Nach alledem benötigt ein erfindungsgemäßes System kein Referenzmodell der Signalverarbeitungspfade, anhand dessen auftretende Verzögerungen gemessen werden können, sondern es erfolgt eine erst am Einsatzort des Systems erfolgende Ermittlung der in den Signalpfaden auftretenden, signalverarbeitungsbedingten Verzögerungen und eine darauf beruhende Berechnung einer individuellen Verzögerungszeit, um welche das im jeweiligen Signalpfad vorliegende Signal verzögert werden muß, um eine zeitsynchrone Weiterleitung der über verschiedene Signalpfade übertragenen Signale gewährleisten zu können.

**Patentansprüche**

1. Verfahren zur zeitsynchronen Weiterleitung von Signalen, bei welchem verschiedene Signale von mindestens einer Signalquelle Ober verschieden Signalpfade zu mindestens einer Signalsenke übertragen werden, wobei in die verschiedenen Signale Zeitmarken eingefügt werden,
   **dadurch gekennzeichnet, daß**

   - die in den verschiedenen Signalpfaden auftretenden Verzögerungen ermittelt,
   - aus den ermittelten Verzögerungen eine minimale Gesamtverzögerung berechnet wird, die größer oder gleich derjenigen Verzögerung ist, die im Signalpfad mit der größten Verzögerung auftritt,
   - die in die verschiedenen Signale eingesetzten Zeitmarken eine Information über die minimale Gesamtverzögerung enthalten, und

   - in jedem Signalpfad dem zu übertragenen Signal eine individuelle Verzögerung auferlegt wird, die der Differenz zwischen der minimalen Gesamtverzögerung und der im jeweiligen Signalpfad dem Signal auferlegten signalverarbeitungsbedingten Verzögerung entspricht.

2. Verfahren nach Anspruch 1,
   **dadurch gekennzeichnet, daß**
   die über einen Signalpfad übertragenen Signale in diesem Signalpfad mehreren Prozeßschritten unterworfen werden, wobei für jeden dieser Prozeßschritte eine Verzögerungszeit ermittelt wird und/oder die in jedem der Prozeßschritte ermittelten Verzögerungswerte einer Steuereinheit zugeführt werden und die Steuereinheit aus den ihr zugeführten Verzögerungszeiten die minimale Gesamtverzögerung berechnet.

3. Verfahren nach Anspruch 2
   **dadurch gekennzeichnet, daß**
   die minimale Gesamtverzögerung im Rahmen eines automatisch erfolgenden Initiatisierungslaufes berechnet wird oder die minimale Gesamtverzögerung nach Eingabe eines Bedienbefehls berechnet wird.

4. Verfahren nach Anspruch 3,
   **dadurch gekennzeichnet, daß**
   die minimale Gesamtverzögerung in vorgegebenen Zeitabständen automatisch berechnet wird oder die minimale Gesamtverzögerung bei jeder Veränderung der Signalpfadarchitektur berechnet wird.

5. Vorrichtung zur zeitsynchronen Weiterleitung von Signalen, mit

   - mindestens einer Signalquelle,
   - mindestens einer Signalsenke, und
   - mehreren zwischen der mindestens einen Signalquelle und der mindestens einen Signalsenke vorgesehenen Signalpfaden,

   **dadurch gekennzeichnet, daß** sie weiterhin

   - Mittel (13) zur Ermittlung der in den verschiedenen Signalpfaden auftretenden Verzögerungen,
   - Mittel (13) zur Berechnung einer minimalen Gesamtverzögerung aus den ermittelten Verzögerungen, welche minimale Gesamtverzögerung größer oder gleich derjenigen Verzögerung ist, die im Signalpfad mit der größten Verzögerung auftritt,
   - Mittel (13) zur Steuerung des Einsetzens von Zeitmarken, welche eine Information über die minimale Gesamtverzögerung enthalten, in die verschiedenen Signale, und

- in jedem Signalpfad ein Verzögerungsglied (5,11,16) aufweist, in welchem dem im Signalpfad übertragenen Signal eine individuelle Verzögerung auferlegt wird, die der Differenz zwischen der minimalen Gesamtverzögerung und der in diesem Signalpfad dem Signal auferlegten signalverarbeitungsbedingten Verzögerung entspricht.

6. Vorrichtung nach Anspruch 5
**dadurch gekennzeichnet, daß**
die Mittel zur Ermittlung der in den verschiedenen Signalpfaden auftretenden Verzögerungen, die Mittel zur Berechnung der minimalen Gesamtverzögerung und die Mittel zur Steuerung des Einsetzens von Zeitmarken eine Steuereinheit sind und oder die Steuereinheit mit einer Zeitbasis (14) verbunden ist.

7. Vorrichtung nach einem der Ansprüche 5 oder 6,
**dadurch gekennzeichnet, daß**
in einem oder mehreren der Signalpfade jeweils eine Signalverarbeitungseinheit (3, 4, 9, 10, 15) angeordnet ist, in der das übertragene Signal einer signalverarbeitungsspezifischen Verzögerung unterliegt und/oder in einem oder mehreren Signalpfade jeweils mehrere Signalverarbeitungseinheiten angeordnet sind, in denen das übertragene Signal jeweils einer signalverarbeitungsbedingten Verzögerung unterliegt und/oder jede Signalverarbeitungseinheit einen Ausgang aufweist, der mit einem Eingang der Steuereinheit verbunden ist.

8. Vorrichtung nach einem der Ansprüche 5 bis 7.
**dadurch gekennzeichnet, daß**
in jedem der Signalpfade eine Vorrichtung (1, 7; 2, 8) zum Einfügen von Zeitmarken vorgesehen ist, in welcher von der Steuereinheit (13) generierte Zeitmarken in das von der Signalquelle (1, 7) erzeugte Signal eingefügt werden.

9. Vorrichtung nach Anspruch 8,
**dadurch gekennzeichnet, daß**
die Vorrichtung zum Einfügen von Zeitmarken diew Signalquelle (1, 7) ist und/oder die Vorrichtung (2, 8) zum Einfügen von Zeitmarken im Signalweg zwischen der Signalquelle und der Signalsenke angeordnet ist oder die Vorrichtung (2, 8) zum Einfügen von Zeitmarken im Signalweg zwischen der Signalquelle und der ersten Signalverarbeitungseinheit dieses Signalweges angeordnet ist.

10. Vorrichtung nach Anspruch 9,
**dadurch gekennzeichnet, daß**
die Steuereinheit (13) einen Ausgang aufweist, an welchem Zeitbasissignale abgreifbar sind, daß die mindestens eine Signalquelle zum Einsetzen von aus den Zeitbasissignalen abgeleiteten ersten Zeitmarken in das Ober den Signalpfad übertragene Signal vorgesehen ist, und daß die im Signalpfad zwischen der Signalquelle und der Signalsenke angeordnete Vorrichtung zum Einfügen von Zeitmarken zur Modifikation der ersten Zeitmarken vorgesehen ist.

11. Vorrichtung nach einem der Ansprüche 5 bis 10,
**dadurch gekennzeichnet, daß**
das Verzögerungsglied (5, 11, 16) jedes Signalpfades im Signalweg zwischen der Signalquelle (1,7) und der Signalsenke (6, 12, 17) angeordnet ist.

12. Vorrichtung nach Anspruch 11,
**dadurch gekennzeichnet, daß**
das Verzögerungsglied (5, 11, 16) jedes Signalpfades im Signalweg zwischen der hintersten Signalverarbeitungseinheit (4, 10, 15) dieses Signalpfades und der Singalsenke (6, 12, 17) angeordnet ist.

**Claims**

1. Method for the time-synchronous forwarding of signals in which various signals are transmitted by at least one signal source over various signal paths to at least one signal drain, wherein time marks are inserted into the various signals, **characterized in that**

   - the delays that occur in the various signal paths are determined,
   - a minimum total delay is calculated from the delays determined that is greater or equal to that delay that occurs in the signal path with the greatest delay,
   - the time marks inserted into the various signals contain an information item about the minimum total delay, and
   - there is imposed on the signal to be transmitted in each signal path an individual delay that corresponds to the difference between the minimum total delay and the delay due to signal processing imposed on the signal in the respective signal path.

2. Method according to Claim 1, **characterized in that** the signals transmitted over a signal path are subjected to a plurality of processing steps in said signal path, wherein a delay time is determined for each of said processing steps and/or the delay values determined in each of the processing steps are fed to a control unit and the control unit calculates the minimum total delay from the delay times fed to it.

**3.** Method according to Claim 2, **characterized in that** the minimum total delay is calculated as part of an initialization run that takes place automatically or the minimum total delay is calculated after inputting an operating command.

**4.** Method according to Claim 3, **characterized in that** the minimum total delay is automatically calculated at predetermined time intervals, or the minimum total delay is calculated for every alteration in the signal path architecture.

**5.** Device for the time-synchronous forwarding of signals, comprising

- at least one signal source,
- at least one signal drain, and
- a plurality of signal paths provided between the at least one signal source and the at least one signal drain,

**characterized in that** it furthermore comprises

- means (13) for determining the delays occurring in the various signal paths,
- means (13) for calculating a minimum total delay from the delays determined, which minimum total delay is greater than or equal to that delay that occurs in the signal path having the greatest delay,
- means (13) for controlling the insertion of time marks that contain an information item about the minimum total delay into the various signals, and
- a delay element (5, 11, 16) in every signal path in which there is imposed on the signal transmitted in the signal path an individual delay that corresponds to the difference between the minimum total delay and the delay due to signal processing imposed on the signal in said signal path.

**6.** Device according to Claim 5, **characterized in that** the means for determining the delays occurring in the various signal paths, the means for calculating the minimum total delay and the means for controlling the insertion of time marks are control units and/or the control unit is connected to a time base (14).

**7.** Device according to either of Claims 5 or 6, **characterized in that** there is disposed in each of one or more of the signal paths a signal processing unit (3, 4, 9, 10, 15) in which the transmitted signal is subject to a signal-processing-specific delay and/or there are disposed in each of one or more signal paths a plurality of signal processing units in which the transmitted signal is subject in each case to a delay due to signal processing and/or every signal processing unit has an output that is connected to an input of the control unit.

**8.** Device according to any one of Claims 5 to 7, **characterized in that** there is provided in each of the signal paths a device (1, 7; 2, 8) for inserting time marks in which time marks generated by the control unit (13) are inserted into the signal generated by the signal source (1, 7).

**9.** Device according to Claim 8, **characterized in that** the device for inserting time marks is the signal source (1, 7) and/or the device (2, 8) for inserting time marks is disposed in the signal path between the signal source and the signal drain, or the device (2, 8) for inserting time marks is disposed in the signal path between the signal source and the first signal processing unit of said signal path.

**10.** Device according to Claim 9, **characterized in that** the control unit (13) has an output at which time-base signals can be tapped, **in that** the at least one signal source is provided for inserting first time marks derived from the time-based signals into the signal transmitted via the signal path, and **in that** the device disposed in the signal path between the signal source and the signal drain is provided for inserting time marks to modify the first time marks.

**11.** Device according to any one of Claims 5 to 10, **characterized in that** the delay element (5, 11, 16) of each signal path is disposed in the signal path between the signal source (1, 7) and the signal drain (6, 12, 17).

**12.** Device according to Claim 11, **characterized in that** the delay element (5, 11, 16) of every signal path is disposed in the signal path between the rearmost signal processing unit (4, 10, 15) of said signal path and the signal drain (6, 12, 17).

**Revendications**

**1.** Procédé de transmission synchrone de signaux, selon lequel différents signaux d'au moins une source de signaux sont transmis par l'intermédiaire de différentes voies de transmission de signaux à au moins un récepteur de signaux, des marques temporelles étant insérées dans les différents signaux, **caractérisé en ce que**:

- les retards apparaissant dans les différentes voies de transmission de signaux sont déterminés,
- un retard total minimum, qui est supérieur ou égal au retard qui apparaît dans la voie de transmission de signaux présentant le retard maximum, est calculé à partir des retards déterminés,

- les marques temporelles, insérées dans les différents signaux, contiennent une information concernant le retard total minimum, et
- dans chaque voie de transmission de signaux un retard individuel est appliqué au signal à transmettre, retard qui correspond à la différence entre le retard total minimum et le retard appliqué au signal dans la voie respective de transmission de signaux et conditionné par le traitement du signal.

2. Procédé selon la revendication 1, **caractérisé en ce que** les signaux transmis par l'intermédiaire d'une voie de transmission de signaux sont soumis, dans cette voie de transmission de signaux à plusieurs étapes de traitement, auquel cas pour chacune de ces étapes de traitement, un temps de retard est déterminé et/ou les valeurs de retard déterminées dans chacune des étapes de traitement sont envoyées à une unité de commande et l'unité de commande calcule, à partir des temps de retard qui lui sont envoyés, le retard total minimum.

3. Procédé selon la revendication 2, **caractérisé en ce que** le retard total minimum est calculé dans le cadre d'un cycle d'initialisation qui s'effectue de façon automatique, ou le retard total minimum est calculé après l'introduction d'une instruction de commande.

4. Procédé selon la revendication 3, **caractérisé en ce que** le retard total minimum est calculé automatiquement dans des intervalles de temps prédéterminés où le retard total minimum est calculé lors de chaque modification de l'architecture du trajet de transmission des signaux.

5. Dispositif pour la transmission synchrone de signaux comportant

- au moins une source de signaux,
- au moins un récepteur de signaux, et
- plusieurs voies de transmission de signaux prévues entre au moins une source de signaux et le au moins un récepteur de signaux,

**caractérisé en ce qu'**il comporte en outre

- des moyens (13) pour déterminer les retards qui apparaissent dans les différentes voies de transmission de signaux;
- des moyens (13) pour calculer un retard total minimum à partir des retards déterminés, et quel retard total minimum est supérieur ou égal au retard qui apparaît dans la voie de transmission de signaux présentant le retard maximum,

- des moyens (13) pour commander l'insertion de marques temporelles, qui contiennent une indication concernant le retard total minimum, dans les différents signaux, et
- dans chaque voie de transmission de signaux, un circuit de retardement (5, 11, 16), dans lequel au signal transmis dans la voie de transmission de signaux est appliqué un retard individuel, qui correspond à la différence entre le retard total minimum et le retard appliqué au signal dans cette voie de transmission de signaux et conditionné par le traitement du signal.

6. Dispositif selon la revendication 5, **caractérisé en ce que** les moyens pour déterminer les retards qui apparaissent dans les différentes voies de transmission de signaux, les moyens pour calculer le retard total minimum et les moyens pour commander l'insertion de marques temporelles constituent une unité de commande et/ou l'unité de commande est reliée à une unité fournissant une base de temps (14).

7. Dispositif selon l'une des revendications 5 ou 6, **caractérisé en ce que** dans une ou plusieurs des voies de transmission de signaux est disposée respectivement une unité de traitement de signaux (3, 4, 9, 10, 15), dans laquelle le signal transmis est soumis à un retard spécifique au traitement du signal et/ou dans une ou plusieurs voies de transmission de signaux sont disposés respectivement plusieurs unités de traitement de signaux, dans lesquelles le signal transmis est soumis respectivement à un retard conditionné par le traitement du signal et/ou chaque unité de traitement de signaux comporte une sortie, qui est reliée à une entrée de l'unité de commande.

8. Dispositif selon l'une des revendications 5 à 7, **caractérisé en ce que** dans chacune des voies de transmission de signaux est prévu un dispositif (1, 7; 2, 8) pour l'insertion de marques temporelles, dans lequel des marques temporelles produites par l'unité de commande (8) sont insérées dans le signal produit par la source de signaux (1, 7).

9. Dispositif selon la revendication 8, **caractérisé en ce que** le dispositif pour l'insertion de marques temporelles est la source de signaux (1, 7) et/ou le dispositif (2, 8) pour l'insertion de marques temporelles dans la voie de transmission de signaux est disposé dans le trajet de transmission de signaux entre la source de signaux et le récepteur de signaux, ou le dispositif (2, 8) pour l'insertion de marques temporelles est disposé dans le trajet de transmission de signaux entre la source de signaux et la première unité de traitement de signaux de ce trajet de transmission de signaux.

10. Dispositif selon la revendication 9, **caractérisé en ce que** l'unité de commande (13) possède une sortie, sur laquelle des signaux de base de temps peuvent être prélevés, que la ou au moins une source de signaux est prévue pour l'insertion de premières marques temporelles, dérivées des signaux de base de temps, dans le signal transmis par l'intermédiaire de la voie de transmission de signaux, et que le dispositif, qui est disposé dans le trajet de transmission de signaux entre la source de signaux et le récepteur de signaux, est prévu pour l'insertion de marques temporelles pour modifier les premières marques temporelles.

11. Dispositif selon l'une des revendications 5 à 10, **caractérisé en ce que** le circuit de retardement (5, 11, 16) de chaque voie de transmission de signaux est disposé dans le trajet de transmission de signaux entre la source de signaux (1, 7) et le récepteur (6, 12, 17).

12. Dispositif selon la revendication 1, **caractérisé en ce que** le circuit de retardement (5, 11, 16) de chaque voie de transmission de signaux est disposé dans le trajet de transmission de signaux entre l'unité la plus en aval de traitement de signaux (4, 10, 15) de cette voie de transmission de signaux et le récepteur de signaux (6, 12, 17).

FIG. 1

FIG.2